# EUROPÄISCHE PATENTSCHRIFT

(11) **EP 1 275 543 B1**
(45) Veröffentlichungstag und Bekanntmachung des Hinweises auf die Patenterteilung: **20.09.2006**
(21) Anmeldenummer: 02013864.0
(22) Anmeldetag: 22.06.2002
(51) Int. Cl.: B60J 7/20

(54) **Abdeckvorrichtung für einen Verdeckkasten**
Covering device for soft top storage compartment
Dispositif de couverture pour compartiment de stockage de capote

(30) Priorität: 14.07.2001 DE 10134370
(43) Veröffentlichungstag der Anmeldung: 15.01.2003
(73) Patentinhaber: DaimlerChrysler AG, 70567 Stuttgart (DE)
(72) Erfinder: Koch, Michael, 71065 Sindelfingen (DE)

(56) Entgegenhaltungen:
- EP-A- 0 882 615
- DE-A- 19 714 105
- FR-A- 2 802 477

## Beschreibung

Die Erfindung betrifft eine Abdeckvorrichtung für einen Verdeckkasten eines Fahrzeugs mit versenkbarer Dachkonstruktion, insbesondere für ein Hardtop-Fahrzeug, mit den Merkmalen des Oberbegriffs des Anspruchs 1.

Aus der DE 44 46 483 C2 ist eine derartige Abdeckvorrichtung für ein Hardtop-Fahrzeug bekannt, bei der die Dachkonstruktion ein vorderes Dachteil und ein mit diesem verbundenes Rückfensterteil aufweist. Die Dachkonstruktion ist mittels einer karosserieseitig abgestützten Zwangssteuerungseinrichtung in den hinter einem Fondbereich in einem Heckbereich der Fahrzeugkarosserie angeordneten Verdeckkasten einschwenkbar. Dieser Verdeckkasten ist mit einem nach hinten hochklappbaren Verdeckkastendeckel verschließbar. Dabei bildet sich zwischen einem vorderen Randbereich des geschlossenen Verdeckkastendeckels und einem hinteren Randbereich des Fondbereichs ein Freiraum aus, der mittels einer Abdeckeinheit verschließbar ist. Diese Abdeckeinheit weist ein vorderes Abdeckteil, ein mittleres Abdeckteil, ein hinteres Abdeckteil sowie zwei seitliche Abdeckteile auf, wobei diese Abdeckteile in einer Schließstellung der Abdeckeinheit bei versenkter Dachkonstruktion eine im wesentlichen ebene und quasi lückenlose Abdeckung des Freiraums bilden, die sich etwa bündig an den Fondbereich und an den geschlossenen Verdeckkastendeckel anschließt. Die seitlichen Abdeckteile sind zwischen einer Aktivstellung, in der jedes seitliche Abdeckteil eine Durchtrittsöffnung für einen C-Säulenbereich der Dachkonstruktion verschließt, und einer Passivstellung verstellbar, in der jedes seitliche Abdeckteil die Durchtrittsöffnung für den C-Säulenbereich freigibt.

Bei der bekannten Abdeckvorrichtung sind die seitlichen Abdeckteile an einer Falteinrichtung schwenkbar gelagert, an der außerdem das mittlere Abdeckteil und das hintere Abdeckteil angelenkt sind. Die Lagerung der seitlichen Abdeckteile ist dabei so ausgebildet, dass sich die Abdeckteile in einer aufgestellten Faltstellung des hinteren und des mittleren Abdeckteils vertikal aufrichten und einwärts auf die Vorderseite des aufgestellten mittleren Abdeckteils zur Fahrzeugmitte hin eingeschwenkt sind. Diese Faltbarkeit und Schwenkbarkeit der Abdeckteile ist erforderlich, um für das Verschwenken der Dachkonstruktion den dazu erforderlichen Verstellweg freizugeben. Bei geschlossener Dachkonstruktion verbleiben die seitlichen Abdeckteile in ihrer auf die Oberseite des mittleren Abdeckteils eingeschwenkten Position, um so die Durchgangsöffnung für den C-Säulenbereich freizugeben. Bei dieser Bauart benötigen die seitlichen Abdeckelemente mit Bereich der durch die anderen drei Abdeckteile gebildeten Hutablage Fahrzeuginnenraum und können vom jeweiligen Fahrzeuginsassen als störend empfunden werden. Bei der bekannten Abdeckvorrichtung ist der Aufwand zur Realisierung der für die seitlichen Abdeckteile vorgesehenen Kinematik relativ groß.

Die vorliegende Erfindung beschäftigt sich mit dem Problem, für eine Abdeckvorrichtung der eingangs genannten Art eine vorteilhafte Ausführungsform anzugeben, die einen relativ preiswerten Aufbau besitzt. Des weiteren soll die Abdeckvorrichtung einen relativ geringen Innenraumbedarf aufweisen.

Dieses Problem wird erfindungsgemäß durch eine Abdeckvorrichtung mit den Merkmalen des Anspruchs 1 gelöst. Vorteilhafte Ausführungsformen sind in den Unteransprüchen dargelegt. Durch die erfindungsgemäß vorgeschlagene Lagerung der seitlichen Abdeckteile am Verdeckkastendeckel sind diese mechanisch unabhängig von den anderen Abdeckteilen verstellbar, wodurch sich Möglichkeiten zur Vereinfachung der für die Verstellung der seitlichen Abdeckteile vorgesehenen Maßnahmen, z.B. für einen entsprechenden Stellantrieb, ergeben. Durch das Verstellen der seitlichen Abdeckteile in deren auf der Unterseite des Verdeckkastendeckels vorgesehene Passivstellung sind die seitlichen Abdeckteile, wenn sie nicht benötigt werden, aus dem Fahrzeuginnenraum weggeklappt. Hierdurch wird die Ästhetik der Abdeckeinheit bei geschlossener Dachkonstruktion erheblich verbessert.

Entsprechend einer bevorzugten Ausführungsform kann jedes seitliche Abdeckteil um eine Schwenkachse schwenkgelagert sein, die bezüglich einer Horizontalebene und bezüglich einer quer zur Fahrzeuglängsrichtung verlaufenden Vertikalebene geneigt verläuft. Durch diese Maßnahme kann für jedes seitliche Abdeckteil mit nur einem Bewegungsfreiheitsgrad eine Passivstellung realisiert werden, die an eine Krümmung angepaßt ist, die auf der Innenseite oder Unterseite des Verdeckkastendeckels vorliegen kann. Dadurch läßt sich eine möglichst raumsparende Unterbringung der weggeklappten seitlichen Abdeckteile erreichen.

Vorzugsweise kann für jedes seitliche Abdeckteil auf der Unterseite des Verdeckkastendeckels eine Aussparung ausgebildet sein, in welche das jeweilige Abdeckteil in seiner Passivstellung einschwenkt. Auf diese Weise werden die Abdeckteile in ihrer Passivstellung in die Kontur der Unterseite des Verdeckkastendeckels integriert, so dass Störkonturen vermieden werden.

Weitere wichtige Merkmale und Vorteile der vorliegenden Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine perspektivische Ansicht auf einen Heckbereich eines mit einer erfindungsgemäßen Abdeckeinrichtung ausgestatteten Personenkraftwagens bei versenkter Dachkonstruktion,
- Fig. 2: eine perspektivische Ansicht auf eine Abdeckeinheit der erfindungsgemäßen Abdeckvorrichtung und auf einen Verdeckkastendeckel des im übrigen nicht dargestellten Kraftfahrzeugs bei versenkter Dachkonstruktion,
- Fig. 3: eine Ansicht wie in Fig. 2, jedoch bei geschlossener Dachkonstruktion, die allerdings nur teilweise angedeutet ist,
- Fig. 4: eine perspektivische Ansicht auf den Heckbereich des Fahrzeugs bei nach hinten hochgeklapptem Verdeckkastendeckel und bei ausgeklappten seitlichen Abdeckteilen, und
- Fig. 5: eine Ansicht wie in Fig. 4 jedoch bei weggeklappten seitlichen Abdeckteilen.

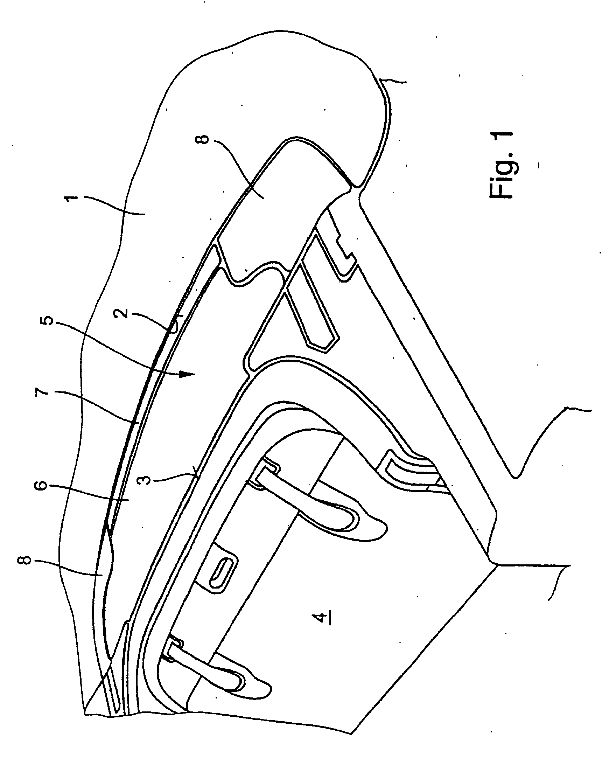

In Fig. 1 ist ein hinterer Abschnitt eines im übrigen nicht dargestellten Personenkraftwagens gezeigt, der eine versenkbare Dachkonstruktion aufweist, so dass es sich bei dem Fahrzeug um ein sogenanntes Cabriolet handelt. Bei der nicht gezeigten Dachkonstruktion handelt es sich vorzugsweise um ein sogenanntes Hardtop, also um eine Dachkonstruktion mit Schalenelementen aus Metall oder Kunststoff. Ebenso ist eine Dachkonstruktion als Softtop möglich, bei der das versenkbare Dach im wesentlichen aus einem Stoffmaterial besteht. Im Heck des Fahrzeugs ist zur Unterbringung der versenkten Dachkonstruktion ein Verdeckkasten ausgebildet. Dieser Verdeckkasten ist mit einem Verdeckkastendeckel 1 verschließbar, der zum Öffnen des Verdeckkastens nach hinten hochklappbar an der Fahrzeugkarosserie gelagert ist. Sofern im Verdeckkasten neben bzw. unter dem Raum für die Unterbringung der versenkten Dachkonstruktion ein zusätzlicher Stauraum, sogenannter Kofferraum, enthalten ist, kann der Verdeckkastendeckel 1 zum Öffnen dieses Kofferraums außerdem nach vor hochklappbar ausgebildet sein.

Bei verschlossenem Verdeckkastendeckel 1 verbleibt zwischen einem vorderen Randbereich 2 des Verdeckkastendeckels 1 und einem hinteren Randbereich 3 eines Fondbereichs 4 des Fahrzeugs ein Freiraum. Dieser Freiraum ist in Fig. 1 durch eine Abdeckeinheit 5 verschlossen. Diese Abdeckeinheit 5 weist ein vorderes Abdeckteil 6, ein hinteres Abdeckteil 7 sowie zwei seitliche Abdeckteile 8 auf. Der Freiraum zwischen Verdeckkastendeckel 1 und Fondbereich 4 wird bei versenkter Dachkonstruktion von den vier Abdeckteilen 6, 7, 8 der Abdeckeinheit 5 im wesentlichen lückenlos geschlossen, wobei sich die Abdeckteile 6, 7, 8 etwa bündig an die Außenkontur des Verdeckkastendeckels 1 sowie des hinteren Randbereichs 3 des Fondbereichs 4 anschließen.

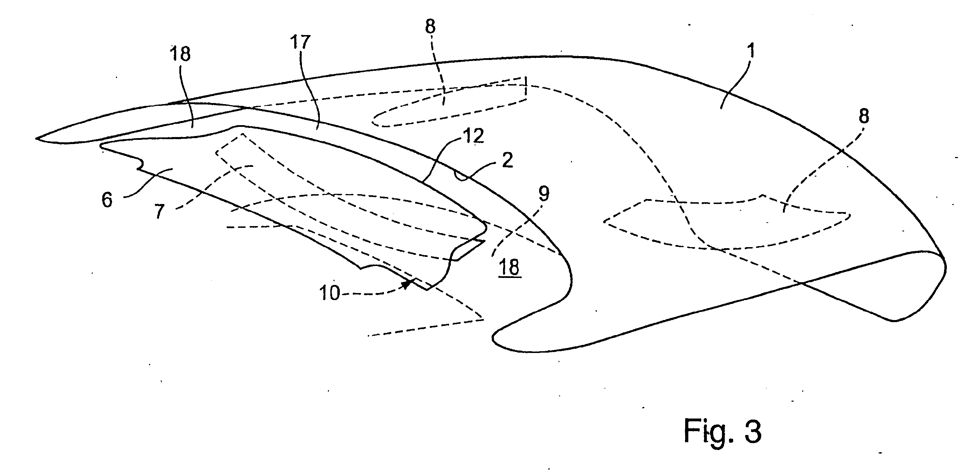

Bei geschlossener Dachkonstruktion sind das hintere Abdeckteil 7 und die seitlichen Abdeckteile 8 weggeklappt, wobei ein vom weggeklappten hinteren Abdeckteil 7 freigegebener Spalt 17 (vgl. Fig. 3) von einem hinteren und unteren Randbereich der ausgefahrenen Dachkonstruktion durchsetzt ist, während die weggeklappten seitlichen Abdeckteile 8 jeweils eine Durchgangsöffnung 18 (vgl. Fig. 3) für eine C-Säule bzw. für einen C-Säulenbereich der geschlossenen Dachkonstruktion freigeben. Das vordere Abdeckteil 6 bildet in der Schließstellung bei verschlossener Dachkonstruktion eine Hutablage im Innenraum des Fahrzeugs.

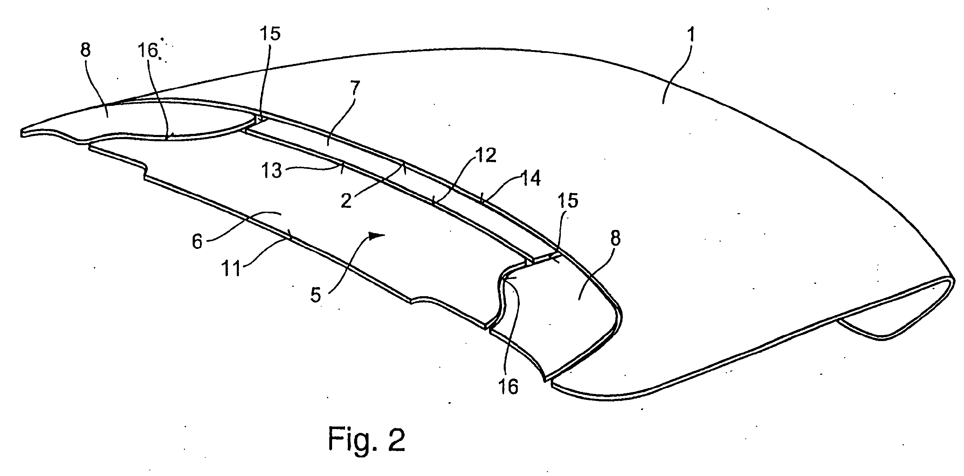

Das vordere Abdeckteil 6 ist an der Fahrzeugkarosserie schwenkbar gelagert ist, während das hintere Abdeckteil 7 am vorderen Abdeckteil 6 schwenkbar gelagert ist. Die seitlichen Abdeckteile 8 sind am Verdeckkastendeckel 1 schwenkbar gelagert. Durch diese Lagerung der einzelnen Abdeckteile 6, 7, 8 läßt sich eine spezielle Verstellkinematik erreichen, die im einzelnen in Verbindung mit den Fig. 2 bis 5 näher erläutert wird, wobei in diesen Figuren im wesentlichen nur noch die Abdeckteile 6, 7, 8 der Abdeckeinheit 5 und der Verdeckkastendeckel in verschiedenen Positionen dargestellt sind.

In Fig. 2 ist die Dachkonstruktion im Verdeckkasten verstaut und die Abdeckeinheit 5 befindet sich in ihrer Schließstellung, so dass sämtliche Abdeckteile 6, 7, 8 zum formintegrierten Verschließen des Freiraums dienen. Hierbei sind die seitlichen Abdeckteile 8 sowie das hintere Abdeckteil 7 ausgeklappt.

In der Stellung gemäß Fig. 2 grenzt das vordere Abdeckteil 6 mit einem vorderen Randbereich 11 an den hinteren Randbereich 3 des Fondbereichs 4 (vgl. Fig. 1). Mit einem hinteren Randbereich 12 grenzt das vordere Abdeckteil 6 an einen vorderen Randbereich 13 des hinteren Abdeckteils 7. Das hintere Abdeckteil 7 grenzt seinerseits mit einem hinteren Randbereich 14 an den vorderen Randbereich 2 des Verdeckkastendeckels 1. Die seitlichen Abdeckteile 8 grenzen sowohl an den vorderen Randbereich 2 des Verdeckkastendeckels 1 als auch an seitliche Randbereiche 15 und 16 des hinteren Abdeckteils 7 bzw. des vorderen Abdeckteils 6. Darüber hinaus grenzen die seitlichen Abdeckteile 8 an den hinteren Randbereich 3 des Fondbereichs 4 an (vgl. Fig. 1).

Zum Schließen der Dachkonstruktion wird zunächst der Verdeckkastendeckel 1 nach hinten hochgeklappt, wobei die daran angelenkten seitlichen Abdeckteile 8 ausgeklappt bleiben. Anschließend wird das vordere Abdeckteil 6 nach vorn hochgeklappt, wobei gleichzeitig das daran gelagerte hintere Abdeckteil 7 auf die Unterseite des vorderen Abdeckteils 6 weggeklappt wird. Auf diese Weise wird für die Dachkonstruktion ein hinreichend großer Verstellweg freigegeben, der ein Verschwenken der Dachkonstruktion aus dem Verdeckkasten über den Passagierraum des Fahrzeugs ermöglicht. Bei geschlossener Dachkonstruktion wird dann das vordere Abdeckteil 6 wieder nach hinten und unten zurückgeklappt wobei allerdings das hintere Abdeckteil 7 an der Unterseite des vorderen Abdeckteils 6 in seinem weggeklappten Zustand verbleibt. Vor dem Zurückklappen des Verdeckkastendeckels 1 nach vorn und unten werden die seitlichen Abdeckteile 8 auf die Unterseite des Verdeckkastendeckels weggeklappt.

In Fig. 3 ist der Zustand wiedergegeben, der sich bei geschlossener Dachkonstruktion, geschlossenem Freiraum und geschlossenem Verdeckkasten ergibt. In diesem Zustand befinden sich das vordere Abdeckteil 6 und der Verdeckkastendeckel 1 in derselben Schließstellung, die sie auch in Fig. 2 bei versenkter Dachkonstruktion zum Verschließen von Freiraum und Verdeckkasten einnehmen. Im Unterschied zu Fig. 2 sind bei diesem Zustand jedoch das hintere Abdeckteil 7 auf die Unterseite des vorderen Abdeckteils 6 und die seitlichen Abdeckteile 8 auf die Unterseite des Verdeckkastendeckels 1 weggeklappt.

Bei weggeklapptem hinteren Abdeckteil 7 bildet sich zwischen dem hinteren Randbereich 12 des vorderen Abdeckteils 6 und dem vorderen Randbereich 2 des Verdeckkastendeckels 1 ein Spalt 17 aus, der von einem nicht dargestellten unteren und hinteren Randbereich der Dachkonstruktion durchsetzt ist. Die weggeklappten seitlichen Abdeckteile 8 hinterlassen zwischen vorderem Abdeckteil 6 und Verdeckkastendeckel 1 jeweils eine Durchgangsöffnung 18 für eine der C-Säulen der mit unterbrochenen Linien angedeuteten und mit 10 bezeichneten geschlossenen Dachkonstruktion. Die C-Säule bzw. der die Durchgangsöffnung 18 durchsetzende C-Säulenbereich ist dabei mit 9 bezeichnet. Die weggeklappten Abdeckteile 7 und 8 sind bei geschlossener Dachkonstruktion 10 somit nicht sichtbar, wodurch sich ein besonders formschön gestalteter Innenraum ergibt. Dies ist insbesondere dadurch möglich, dass die Dimensionierung der seitlichen Abdeckklappen 8 sowie der hinteren Abdeckklappe 7 so gewählt ist, dass das vordere Abdeckteil 6 bei geschlossener Dachkonstruktion 10 mit seinem hinteren Randbereich 12 im wesentlichen nahtlos an den unteren, inneren Randbereich der Dachkonstruktion 10 anschließt.

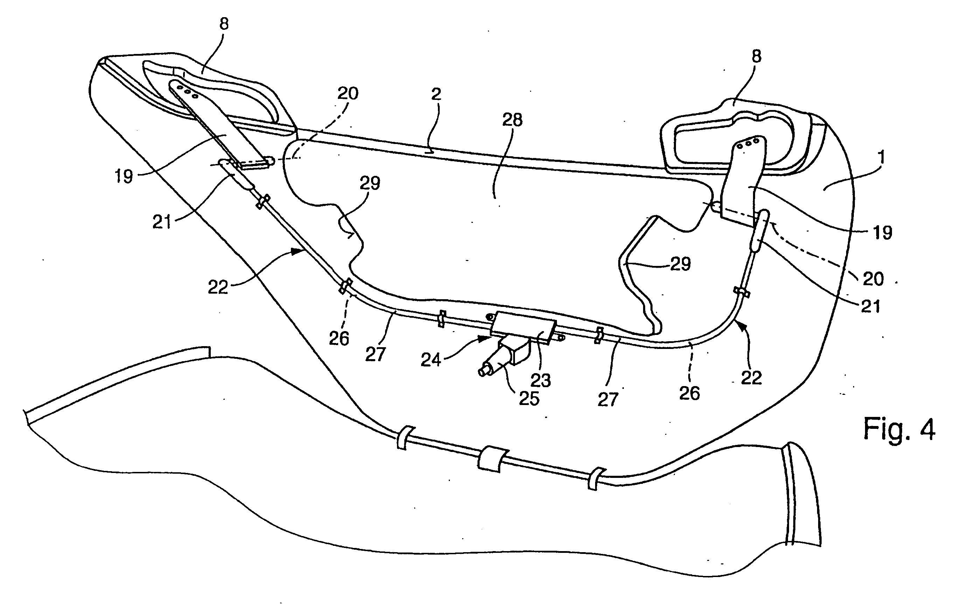

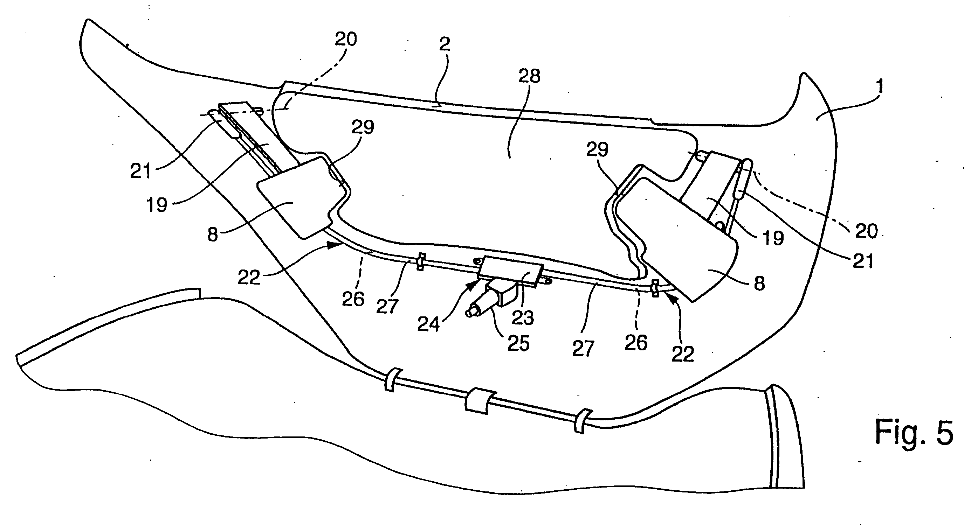

Die Fig. 4 und 5 zeigen eine perspektivische Ansicht auf die Unterseite des zum Öffnen des Verdeckkastens nach hinten hochgeklappten Verdeckkastendeckels 1, wobei in Fig. 4 die seitlichen Abdeckteile 8 in ihre Aktivstellung ausgeklappt sind und eine formintegrierte Verlängerung des Verdeckkastendeckels 1 bilden, während die seitlichen Abdeckteile 8 in Fig. 5 auf die Unterseite des Verdeckkastendeckels 1 raumsparend in ihre Passivstellung weggeklappt sind.

Entsprechend den Fig. 4 und 5 sind die seitlichen Abdeckteile 8 jeweils an ihrer Unterseite an einem Schwenkarm 19 befestigt, der an seinem vom jeweiligen Abdeckteil 8 abgewandten Ende um eine Schwenkachse 20 an der Unterseite des Verdeckkastendeckels 1 schwenkbar gelagert ist. Jeder Schwenkarm 19 ist dabei mit einer hier nicht gezeigten Antriebswelle drehfest verbunden, die koaxial zur Schwenkachse 20 der Lagerung des Schwenkarms 19 verläuft. Jede Antriebswelle ist mit einem seitlichen Getriebe 21 antriebsverbunden, wobei die jeweilige Antriebswelle an den Ausgang des jeweiligen Getriebes 21 angeschlossen ist. Der Eingang des jeweiligen Getriebes 21 ist an eine Zug-Druck-Kabeleinheit 22 angeschlossen. Die seitlichen Getriebe 21 sind jeweils so ausgebildet, dass sie eingangsseitige Linearverstellungen in ausgangsseitige Drehverstellungen umwandeln und dementsprechend an die Antriebswelle übertragen.

Jede der beiden Zug-Druck-Kabeleinheiten 22 ist jeweils an einen Ausgang eines zentralen Getriebes 23 einer zentralen Antriebseinheit 24 angeschlossen. Diese Antriebseinheit 24 umfaßt außerdem einen Drehantrieb 25, der an den Eingang des zentralen Getriebes 23 angeschlossen ist und beispielsweise als Elektromotor ausgebildet ist. Das zentrale Getriebe 23 ist so ausgebildet, dass es eingangsseitige Drehverstellungen in ausgangsseitige Linearverstellungen umwandelt, die synchron auf die beiden ausgangsseitig angeschlossenen Zug-Druck-Kabeleinheiten 22 übertragen werden.

Die genannten Zug-Druck-Kabeleinheiten 22 bestehen vorzugsweise jeweils aus einem flexiblen sowie druck- und zugsteifen Kabel 26, das in einer flexiblen sowie druck- und zugsteifen Hülle 27 verlegt ist. Die aus der Hülle 27 austretenden Enden des Kabels 26 sind zweckmäßig als biege-, druck- und zugsteifes Rohrstück oder Stabstück ausgebildet, das sich in besonderer Weise zum Anschluß an die seitlichen Getriebe 21 bzw. an das zentrale Getriebe 23 eignet.

Um die ausgeklappten seitlichen Abdeckteile 8 von ihrer in Fig. 4 gezeigten Aktivstellung, in der sie gemäß Fig. 2 die jeweilige Durchgangsöffnung 18 verschließen, in die in Fig. 5 wiedergegebene Passivstellung, in der sie die Durchgangsöffnungen 18 freigeben, verschwenken zu können, wird von einer entsprechenden, nicht dargestellten Steuerungseinheit der Drehantrieb 25 betätigt, der dann eine Drehverstellung am Eingang des zentralen Getriebes 23 einleitet. An den Ausgängen des zentralen Getriebes 23 werden somit Linearverstellungen in die Kabel 26 der Zug-Druck-Kabeleinheiten 23 eingeleitet, wodurch diese auf die Eingänge der seitlichen Getriebe 21 übertragen werden. An den Ausgängen der seitlichen Getriebe 21 erfolgt dann wieder eine Drehverstellung, die über die jeweilige Antriebswelle auf den zugeordneten Schwenkarm 19 übertragen wird. Dementsprechend führen die Schwenkarme 19 und somit die daran fest angebrachten seitlichen Abdeckteile 8 die gewünschte Schwenkverstellung um die Schwenkachsen 20 durch bis die in Fig. 5 gezeigte Passivstellung erreicht ist. Um diese Passivstellung erreichen zu können, kann es zweckmäßig sein, die Schwenkachsen 20 räumlich so zu orientieren, dass diese bezüglich einer Horizontalebene und/oder bezüglich einer quer zur Fahrzeuglängsrichtung verlaufenden Vertikalebene geneigt verlaufen.

In der hier gezeigten Ausführungsform besitzt der Verdeckkastendeckel 1 an seiner Unterseite ein Versteifungs- oder Strukturteil 28, in das an jeder Seite jeweils eine Aussparung 29 eingearbeitet ist. Wie aus Fig. 5 hervorgeht, ist die Kinematik der seitlichen Abdeckteile 8 so gewählt, dass diese in ihrer Passivstellung formintegriert in die jeweilige Aussparung 29 einschwenken. Auf diese Weise können auf der Innenseite bzw. Unterseite des Verdeckkastendeckels 1 Störkonturen reduziert bzw. vermieden werden.

Wie aus den Fig. 4 und 5 hervorgeht, ist der komplette Antrieb der seitlichen Abdeckteile 8 an der Unterseite des Verdeckkastendeckels 1 angeordnet, so dass die Verstellung der seitlichen Abdeckteile 8 mechanisch entkoppelt ist von der Verstellung der Dachkonstruktion sowie des vorderen Abdeckteils 6 und des hinteren Abdeckteils 7. Die Synchronisation des Bewegungsablaufs der seitlichen Abdeckteile 8 mit den Bewegungsabläufen der anderen Abdeckteile 6, 7 sowie der Dachkonstruktion kann durch eine elektrische und/oder elektronische Kopplung, z.B. mittels geeigneter Sensoren und Schalter, erfolgen.

## Patentansprüche

1. Abdeckvorrichtung für einen Verdeckkasten eines Fahrzeugs mit versenkbarer Dachkonstruktion (10), insbesondere für ein Hardtop-Fahrzeug, wobei die Dachkonstruktion (10) in den hinter einem Fondbereich (4) in einem Heckbereich der Fahrzeugkarosserie angeordneten Verdeckkasten einschwenkbar ist, wobei der Verdeckkasten mit einem nach hinten hochklappbaren Verdeckkastendeckel (1) verschließbar ist, wobei zwischen einem vorderen Randbereich (2) des geschlossenen Verdeckkastendeckels (1) und einem hinteren Randbereich (3) des Fondbereichs (4) ein Freiraum verbleibt, der mit einer Abdeckeinheit (5) verschließbar ist, die zwei seitliche Abdeckteile (8) aufweist, die zwischen einer Aktivstellung, in der jedes seitliche Abdeckteil (8) eine Durchtrittsöffnung (18) für einen C-Säulenbereich (9) der Dachkonstruktion (10) verschließt, und einer Passivstellung verstellbar sind, in der jedes seitliche Abdeckteil (8) die zugeordnete Durchtrittsöffnung (18) für den jeweiligen C-Säulenbereich (9) freigibt,
**dadurch gekennzeichnet,**
**dass** die seitlichen Abdeckteile (8) am Verdeckkastendeckel (1) schwenkbar gelagert sind, derart, dass die seitlichen Abdeckteile (8) in ihrer Aktivstellung an den vorderen Randbereich (2) des Verdeckkastendeckels (1) angrenzen und in ihrer Passivstellung an der Unterseite des Verdeckkastendeckels (1) anliegen.

2. Abdeckvorrichtung nach Anspruch 1,
**dadurch gekennzeichnet,**
**dass** jedes seitliche Abdeckteil (8) um eine Schwenkachse (20) schwenkgelagert ist, die bezüglich einer Horizontalebene und bezüglich einer quer zur Fahrzeuglängsrichtung verlaufenden Vertikalebene geneigt verläuft.

3. Abdeckvorrichtung nach Anspruch 1 oder 2,
**dadurch gekennzeichnet,**
**dass** für jedes seitliche Abdeckteil (8) auf der Unterseite des Verdeckkastendeckels (1) eine Aussparung (29) ausgebildet ist, in welche das jeweilige Abdeckteil (8) in seiner Passivstellung einschwenkt.

4. Abdeckvorrichtung nach einem der Ansprüche 1 bis 3,
**dadurch gekennzeichnet,**
**dass** jedes seitliche Abdeckteil (8) über einen Schwenkarm (19) am Verdeckkastendeckel (1) gelagert ist, wobei jeder Schwenkarm (19) am jeweiligen Abdeckteil (8) fest angebracht ist und am Verdeckkastendeckel (1) schwenkgelagert ist.

5. Abdeckvorrichtung nach Anspruch 4,
**dadurch gekennzeichnet,**
**dass** jeder Schwenkarm (19) mit einer Antriebswelle drehfest verbunden ist, die koaxial zur Lagerung des jeweiligen Abdeckteils (8) verläuft, wobei jede Antriebswelle an einen Ausgang eines seitlichen Getriebes (21) angeschlossen ist, das eingangsseitige Linearverstellungen in ausgangsseitige Drehverstellungen wandelt.

6. Abdeckvorrichtung nach Anspruch 5,
**dadurch gekennzeichnet,**
**dass** eine zentrale Antriebseinheit (24) zur Verstellung beider seitlicher Abdeckteile (8) vorgesehen ist, die ausgangsseitig Linearverstellungen erzeugt, wobei Übertragungsmittel (22) vorgesehen sind, die Linearverstellungen vom Ausgang der Antriebseinheit (24) an die Eingänge der seitlichen Getriebe (21) übertragen.

7. Abdeckvorrichtung nach Anspruch 6,
**dadurch gekennzeichnet,**
**dass** die Übertragungsmittel (22) für jedes seitliche Getriebe (21) ein flexibles sowie druck- und zugsteifes Kabel (26) aufweisen, das in einer flexiblen sowie druck- und zugsteifen Hülle (27) verlegt ist und einen Ausgang der zentralen Antriebseinheit (24) mit dem Eingang des jeweiligen seitlichen Getriebes (21) verbindet.

8. Abdeckvorrichtung nach Anspruch 6 oder 7,
**dadurch gekennzeichnet,**
**dass** die zentrale Antriebseinheit (24) einen Drehantrieb (25) und ein zentrales Getriebe (23) aufweist, das eingangsseitige Drehverstellungen in ausgangsseitige Linearverstellungen wandelt, wobei der Drehantrieb (25) an den Eingang des zentralen Getriebes (23) angeschlossen ist.

9. Abdeckvorrichtung nach einem der Ansprüche 6 bis 8,
**dadurch gekennzeichnet,**
**dass** die zentrale Antriebseinheit (24) an der Unterseite des Verdeckkastendeckels (1) angebracht ist.

10. Abdeckvorrichtung nach einem der Ansprüche 6 bis 9,
**dadurch gekennzeichnet,**
**dass** eine Steuerung zur Betätigung der zentralen Antriebseinheit (24) vorgesehen ist, die elektrisch und/oder elektronisch mit einer Zwangssteuerungseinrichtung zum Verstellen der Dachkonstruktion gekoppelt ist.

## Claims

1. Cover device for a folding top compartment of a vehicle with a lowerable roof structure (10), in particular for a hardtop vehicle, it being possible to pivot the roof structure (10) into the folding top compartment arranged behind a rear region (4) in a back part of the vehicle bodywork, it being possible to close the folding top compartment with a folding top compartment lid (1) which can be folded up towards the rear and a free space remaining between a front edge region (2) of the closed folding top compartment lid (1) and a rear edge region (3) of the rear region (4), which free space can be closed with a cover unit (5) which has two lateral cover parts (8), which can be adjusted between an active position in which each lateral cover part (8) closes off a passage opening (18) for a C pillar region (9) of the roof structure (10), and a passive position in which each lateral cover part (8) clears the assigned passage opening (18) for the respective C pillar region (9), **characterized in that** the lateral cover parts (8) are pivotably mounted on a folding top compartment lid (1) in such a way that in their active position the lateral cover parts (8) adjoin the front edge region (2) of the folding top compartment lid (1), and in their passive position bear against the underside of the folding top compartment lid (1).

2. Cover device according to Claim 1, **characterized in that** each lateral cover part (8) is mounted so as to be pivotable about a pivot axis (20) which runs at an incline with respect to a horizontal plane and with respect to a vertical plane running transversely with respect to the longitudinal direction of the vehicle.

3. Cover device according to Claim 1 or 2, **characterized in that** a cutout (29), into which the respective cover part (8) pivots in its passive position, is formed for each lateral cover part (8) on the underside of the folding top compartment lid (1).

4. Cover device according to one of Claims 1 to 3, **characterized in that** each lateral cover part (8) is mounted on the folding top compartment lid (1) by means of a pivot arm (19), each pivot arm (19) being permanently attached to the respective cover part (8) and being pivotably mounted on the folding top compartment lid (1).

5. Cover device according to Claim 4, **characterized in that** each pivot arm (19) is connected fixed in terms of rotation to a drive shaft which runs coaxially with respect to the bearing of the respective cover part (8), each drive shaft being connected to an output of a lateral gearbox (21) which converts input-end linear adjustments into output-end rotary adjustments.

6. Cover device according to Claim 5, **characterized in that** a central drive unit (24) for adjusting both lateral cover parts (8) is provided, said drive unit (24) generating linear adjustments at the output end, transmission means (22) being provided which transmit linear adjustments from the output of the drive unit (24) to the inputs of the lateral gearboxes (21).

7. Cover device according to Claim 6, **characterized in that** the transmission means (22) for each lateral gearbox (21) have a flexible cable (26) which is rigid under compression and under tension and is laid in a flexible sleeve (27) which is rigid under compression and under tension and connects an output of the central drive unit (24) to the input of the respective lateral gearbox (21).

8. Cover device according to Claim 6 or 7, **characterized in that** the central drive unit (24) has a rotary drive (25) and a central gearbox (23) which converts input-end rotary adjustments into output-end linear adjustments, the rotary drive (25) being connected to the input of the central gearbox (23).

9. Cover device according to one of Claims 6 to 8, **characterized in that** the central drive unit (24) is mounted on the underside of the folding top compartment lid (1).

10. Cover device according to one of Claims 6 to 9, **characterized in that** a control for activating the central drive unit (24) is provided which is electrically and/or electronically coupled to a positive control device for adjusting the roof structure.

## Revendications

1. Dispositif de recouvrement pour un compartiment de stockage de capote d'un véhicule avec construction de toit (10) escamotable, en particulier pour un véhicule à toit en dur, la construction de toit (10) pouvant être basculée à l'intérieur du compartiment de stockage de capote disposé derrière une zone de sièges arrière (4) dans une zone arrière de la carrosserie du véhicule, le compartiment de stockage de capote pouvant être fermé avec un couvercle de compartiment (1) pouvant être relevé vers l'arrière, un espace libre restant entre une zone périphérique (2) avant du couvercle de compartiment de stockage de capote (1) fermé et une zone périphérique (3) arrière de la zone de sièges arrière (4), lequel espace peut être fermé avec une unité de recouvrement (5), qui présente deux parties de recouvrement (8) latérales, lesquelles peuvent être réglées entre une position active, dans laquelle chaque partie de recouvrement (8) latérale ferme une ouverture de passage (18) pour une zone de colonne C (9) de la construction de toit (10), et une position passive, dans laquelle chaque partie de recouvrement (8) latérale libère l'ouverture de passage (18) attribuée pour la zone de colonne C (9) respective, **caractérisé en ce que**, les parties de recouvrement (8) latérales sont logées de façon basculante sur le couvercle du compartiment de stockage de capote, de telle sorte que les parties de recouvrement (8) latérales sont contiguës dans leur position active à la zone périphérique (2) avant du couvercle de compartiment de stockage de capote (1) et sont contiguës dans leur position passive au côté inférieur du couvercle de compartiment de stockage de capote (1).

2. Dispositif de recouvrement selon la revendication 1, **caractérisé en ce que** chaque partie de recouvrement (8) latérale est logée de façon basculante autour d'un axe de pivotement (20), qui s'étend de façon inclinée par rapport à un plan horizontal et par rapport à un plan vertical agencé transversalement à la direction longitudinale du véhicule.

3. Dispositif de recouvrement selon la revendication 1 ou 2, **caractérisé en ce que**, pour chaque partie de recouvrement (8) latérale, sur le côté inférieur du couvercle du compartiment de stockage de capote (1) est formé un évidement (29), dans lequel la partie de recouvrement (8) respective bascule dans sa position passive.

4. Dispositif de recouvrement selon l'une quelconque des revendications 1 à 3, **caractérisé en ce que** chaque partie de recouvrement (8) latérale est logée au moyen d'un bras pivotant (19) sur le couvercle du compartiment de stockage de capote (1), chaque bras pivotant (19) étant placé de façon fixe sur la partie de recouvrement (8) respective et étant logé de façon basculante sur le couvercle du compartiment de stockage de capote (1).

5. Dispositif de recouvrement selon la revendication 4, **caractérisé en ce que** chaque bras pivotant (19) est relié de façon solidaire en rotation à un arbre d'entraînement qui s'étend de façon coaxiale au logement de la partie de recouvrement (8) respective, chaque arbre d'entraînement étant raccordé à une sortie d'une transmission (21) latérale, qui convertit des réglages linéaires côté entrée en réglages de rotation côté sortie.

6. Dispositif de recouvrement selon la revendication 5, **caractérisé en ce qu'**une unité d'entraînement (24) centrale est prévue pour le réglage des deux parties de recouvrement (8) latérales, qui génère côté sortie des réglages linéaires, des moyens de transmission (22) étant prévus, lesquels transmettent des réglages linéaires de la sortie de l'unité d'entraînement (24) aux entrées des transmissions (21) latérales.

7. Dispositif de recouvrement selon la revendication 6, **caractérisé en ce que** les moyens de transmission (22) présentent pour chaque transmission (21) latérale un câble (26) flexible ainsi que rigide à la pression et à la traction, qui est poussé dans le manchon (27) flexible ainsi que rigide à la pression et à la traction et relie une sortie de l'unité d'entraînement (24) centrale à l'entrée de la transmission (21) latérale respective.

8. Dispositif de recouvrement selon la revendication 6 ou 7, **caractérisé en ce que** l'unité d'entraînement (24) centrale présente une commande de rotation (25) et une transmission (23) centrale qui convertit des réglages de rotation côté entrée en réglages linéaires côté sortie, la commande de rotation (25) étant raccordée à l'entrée de la transmission (23) centrale.

9. Dispositif de recouvrement selon l'une quelconque des revendications 6 à 8, **caractérisé en ce que** l'unité d'entraînement (24) centrale est placée sur le côté inférieur du couvercle du compartiment de stockage de capote (1).

10. Dispositif de recouvrement selon l'une quelconque des revendications 6 à 9, **caractérisé en ce que** il est prévu une commande pour l'actionnement de l'unité d'entraînement (24) centrale, qui est couplée électriquement et/ou électroniquement à un dispositif de commande forcée pour le réglage de la construction de toit.
